# EUROPÄISCHE PATENTSCHRIFT

(11) **EP 3 155 290 B1**
(45) Veröffentlichungstag und Bekanntmachung des Hinweises auf die Patenterteilung: **29.08.2018**
(21) Anmeldenummer: 15718955.6
(22) Anmeldetag: 04.05.2015
(51) Int. Cl.: F16F 9/58

(54) **FÜHRUNGSELEMENT FÜR EINE ZUGANSCHLAGFEDER EINES FAHRWERKDÄMPFERS UND FAHRWERKDÄMPFER**
GUIDE ELEMENT FOR A BUFFER SPRING IN A CHASSIS SHOCK ABSORBER AND CHASSIS SHOCK ABSORBER
ÉLÉMENT DE GUIDAGE POUR UNE BUTÉE ÉLASTIQUE DE DÉTENTE D'UN AMORTISSEUR DE CHÂSSIS ET AMORTISSEUR DE CHÂSSIS

(30) Priorität: 13.06.2014 DE 102014211372
(43) Veröffentlichungstag der Anmeldung: 19.04.2017
(73) Patentinhaber: Bayerische Motoren Werke Aktiengesellschaft, 80809 München (DE)
(72) Erfinder: GUHLMANN, Marc, 80639 München (DE)
(86) Internationale Anmeldenummer: PCT/EP2015/059644
(87) Internationale Veröffentlichungsnummer: WO 2015/188979

(56) Entgegenhaltungen:
- EP-A1- 2 151 598
- DE-A1-102004 039 702
- DE-A1-102006 005 621
- US-A1- 2011 101 585

## Beschreibung

Die Erfindung betrifft ein Führungselement für eine Zuganschlagfeder eines Fahrwerkdämpfers nach dem Oberbegriff des Anspruchs 1 und geht von der US 2011/101585 A1 aus.

Fahrwerkdämpfer in Fahrzeugen weisen eine Zuganschlagfeder auf. Diese ist im Zylinder des Fahrwerkdämpfers montiert und kann mit einem an der Kolbenstange vorgesehenen Anschlagelement zusammenwirken und so vor Erreichen des Endanschlags des Kolbens bzw. der Kolbenstange einen Aufprall an der Stirnseite des Zylinders bzw. einer stirnseitigen Anschlagfläche dämpfen.

Die Zuganschlagfeder ist beispielsweise zylinderseitig befestigt und mit einem Führungselement auf der Kolbenstange gelagert. Dies kann durch Klemmen der Zuganschlagfeder im Zylinderrohr erfolgen. Alternativ kann die Zuganschlagfeder mittels einer Klemmverbindung an der Kolbenstange geklemmt werden. Das Führungselement stellt zum einen eine reibungsarme Lagerung auf der Kolbenstange sicher. Zum anderen dient diese als Anschlagfläche, die mit dem kolbenstangenseitigen Anschlagelement zusammenwirken kann.

Um die Reibung des Führungselements auf der Kolbenstange zu reduzieren, weisen die bisher bekannten Führungselemente ein Spiel auf der Kolbenstange auf. Dies führt aber bei bestimmten Anregungen des Dämpfers, beispielsweise bei Queranregungen, dazu, dass das Führungselement an der Kolbenstange anschlagen kann, wodurch es zu einer unerwünschten Geräuschbildung kommt. Eine Reduzierung des Spiels auf der Kolbenstange, beispielsweise durch eine Presspassung, die eine solche Geräuschbildung reduzieren könnte, würde aber zu einer erhöhten Reibung zwischen Kolbenstange und Führungselement führen.

In der EP 2 151 598 A1 wird zur Lösung dieses Problems vorgeschlagen, dass die Zuganschlagfeder im entspannten Zustand eine Querkraft auf die Kolbenstange ausübt. In der eingangs genannten US 2011/101585 A1 hingegen ist als Abhilfe dieser Problematik am Führungselement ein elastisches Element vorgesehen, welches quasi als Federelement wirkend an der Kolbenstange anliegt. Insbesondere ist dieses elastische Element als Elastomerring ausgebildet, der die Kolbenstange umgreift. Jedoch erhöht solch ein Elastomerring die Reibung zwischen der Kolbenstange und dem Führungselement nennenswert.

Aufgabe der Erfindung ist es, ein demgegenüber verbessertes Führungselement für einen Fahrwerkdämpfer bereitzustellen, das bei geringer Reibung zwischen Kolbenstange und Führungselement eine Geräuschbildung durch Anschlagen an der Kolbenstange reduziert. Aufgabe der Erfindung ist es des Weiteren, einen entsprechenden Fahrwerkdämpfer mit einer reduzierten Geräuschbildung bereitzustellen.

Zur Lösung der Aufgabe werden die Merkmale des Anspruch 1 vorgeschlagen, wonach ein für diesen Zweck grundsätzlich bekanntes (elastisches) Federelement eine Blattfeder vorgesehen ist.. Durch ein solches Blattfeder-Element wird das Führungselement gegen die Kolbenstange beaufschlagt und ist somit spielfrei auf diesem gelagert, ohne dass bei einer Bewegung der Kolbenstange hohe Reibungskräfte auftreten. Bei Querbeschleunigungen hingegen ist ein Anschlagen des Führungselements an der Kolbenstange verhindert oder wird zumindest durch das Federelement gedämpft bzw. abgefedert, so dass die Geräuschbildung deutlich reduziert ist.

Um eine spielfreie bzw. geräuscharme Lagerung des Führungselements auf der Kolbenstange zu erreichen, ist ein einzelnes Federelement ausreichend. Vorzugsweise weist das Führungselement aber mehrere, in Umfangsrichtung um den Aufnahmeraum verteilt angeordnete Blattfederelemente auf. Durch die in Umfangsrichtung symmetrische Anordnung der Federelemente ist das Führungselement zentriert auf der Kolbenstange geführt, sodass die Kolbenstange in Umfangsrichtung nicht an der Innenwand des Aufnahmeraums anliegt. Das Führungselement kann durch Einfedern der Blattfederelemente in radialer Richtung in alle Richtungen gleichmäßig Stöße auf das Führungselement bzw. den Fahrwerkdämpfer ausgleichen, sodass Stöße auf den Fahrwerkdämpfer unabhängig von der Wirkrichtung nicht zu einem Anschlagen des Führungselements an der Kolbenstange führen.

Vorteilhafterweise ist mit der Gestaltung des Federelements als Blattfeder, die mit einem Federabschnitt in den Aufnahmeraum ragt, eine kompakte Bauweise darstelltbar. Eine Blattfeder weist eine sehr geringe Bauhöhe auf, sodass diese zwischen Zuganschlagfeder und Kolbenstange angeordnet werden kann. Zudem kann eine solche Feder nicht abknicken oder anderweitig so verformt werden, dass die Funktion der Feder eingeschränkt ist.

Das Blattfederelement ragt beispielsweise bogenförmig in den Aufnahmeraum, wobei das Federelement in einem Scheitelpunkt den geringsten Abstand zur Mittelachse des Aufnahmeraums hat. Die Blattfeder ist beispielsweise an den äußeren Enden am Führungselement fixiert und weist einen dazwischenliegenden Abschnitt auf, der in den Aufnahmeraum ragt. Die Enden einer solchen Blattfeder sind also am Führungselement befestigt, während der dazwischenliegende Federabschnitt in montiertem Zustand an der Kolbenstange anliegt. Somit können auch keine Teile der Feder bzw. des Federelements an der Kolbenstange anschlagen, sodass eine geräuscharme Ausführung des Führungselements bzw. eines Fahrwerkdämpfers mit einem solchen Führungselement möglich ist.

Das Blattfederelement ist vorzugsweise im Wesentlichen bezüglich des Aufnahmeraums in axialer Richtung angeordnet, sodass die Kolbenstange gewissermaßen in Längsrichtung an diesem Federelement entlang gleiten kann. Neben einem geringen Reibungswiderstand zwischen Federelement und Kolbenstange bietet diese Anordnung einer Blattfeder den Vorteil, dass eine einfache Montage des Führungselements auf der Kolbenstange möglich ist. Beim Einschieben der Kolbenstange in den Aufnahmeraum wirken die bogenförmig ausgebildeten Abschnitte der Feder als Einführschrägen, die beim Einschieben der Kolbenstange von der Kolbenstange verdrängt werden. Durch dieses Verdrängen werden die Federelemente zudem vorgespannt, sodass eine aufwendige Ausrichtung des Federelements oder eine Vorspannung des Federelements nicht erforderlich ist.

Die Führung kann beispielsweise zwei ringförmige Führungsbauteile aufweisen und das Federelement ist zwischen den Führungsbauteilen angeordnet. Sind die Federelemente in Längsrichtung verlaufend angeordnete Blattfedern, kann so die Bauhöhe des Führungselements in radialer Richtung bezüglich des Aufnahmeraums reduziert werden. Das Führungselement kann beispielsweise im Bereich der Federelemente Aussparungen aufweisen, da bei Blattfedern keine radiale Abstützung der Federelemente erforderlich ist. Das Führungselement kann so im Bereich der Federelemente in radialer Richtung wesentlich dünner ausgebildet sein, sodass eine platzsparende Anordnung des Führungselements zwischen der Zuganschlagfeder und der Kolbenstange möglich ist. Zudem ist durch diese Anordnung ein längerer Aufnahmeraum bereitgestellt, durch den eine bessere Führung des Führungselements auf der Kolbenstange möglich ist.

Vorzugsweise ist das Führungselement einstückig mit den Führungsbauteilen ausgebildet und verbindet diese miteinander. Dadurch sind am Führungselement keine losen Teile vorhanden, die verloren gehen könnten. Das Führungselement hat zudem einen wesentlich einfacheren Aufbau, sodass eine schnelle und unkomplizierte Montage des Führungselements möglich ist. Insbesondere ist keine Vormontage des Führungselements erforderlich.

Die Aufnahme für das Ende der Zuganschlagfeder kann durch einen radial nach außen ragenden Flansch gebildet sein. In dieser Ausführungsform kann sich die Führung in die Zuganschlagfeder erstrecken, sodass das Führungselement zusätzlich durch die Feder gehalten bzw. dessen Orientierung festgelegt ist.

Zur Lösung der Aufgabe weist des Weiteren ein Fahrwerkdämpfer ein Dämpferrohr, in dem eine Kolbenstange sowie eine in Längsrichtung der Kolbenstange angeordnete Zuganschlagfeder vorgesehen sind, sowie ein erfindungsgemäßes Führungselement auf, wobei das Ende der Zuganschlagfeder an der Aufnahme anliegt und das Führungselement mit der Führung in Längsrichtung so verschiebbar auf der Kolbenstange gelagert, dass zumindest ein durch eine Blattfeder gebildetes und mit einem Federabschnitt in den Aufnahmeraum ragendes Federelement gegen die Kolbenstange vorgespannt ist.

Weitere Vorteile und Merkmale finden sich in der nachfolgenden Beschreibung in Verbindung mit den beigefügten Zeichnungen. In diesen zeigen:
- Figur 1 einen Fahrwerkdämpfer aus dem Stand der Technik,
- Figur 2 eine Teilschnittansicht durch den Fahrwerkdämpfer aus Figur 1,
- Figur 3 das Führungselement für die Zuganschlagfeder aus dem Fahrwerkdämpfer aus Figur 1,
- Figur 4 eine perspektivische Ansicht eines erfindungsgemäßen Führungselements, und
- Figur 5 eine Schnittansicht des Führungselements aus Figur 4.

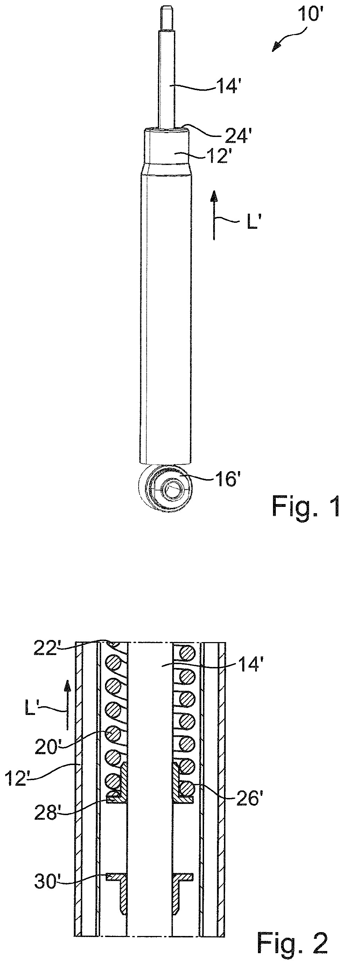

In Figur 1 ist ein Fahrwerkdämpfer 10' für ein Fahrzeug gezeigt. Der Fahrwerkdämpfer 10' hat ein Dämpferrohr 12', in dem ein mit einer aus dem Dämpferrohr 12' ragenden Kolbenstange 14' gekoppelter Kolben beweglich gelagert ist. Am Dämpferrohr 12' ist ein erstes Befestigungselement 16' vorgesehen. An der Kolbenstange 14' ist ein zweites Befestigungselement vorgesehen. Mit diesen Befestigungselementen wird der Fahrwerkdämpfer im Fahrzeug montiert, wobei ein Befestigungselement an einem beweglichen Fahrwerkselement und das andere Befestigungselement fahrzeugfest montiert werden.

Werden die mit dem Fahrwerkdämpfer 10' verbundenen Teile gegeneinander bewegt, wird der Kolben im Dämpferrohr 12' in Längsrichtung L' verschoben. Durch ein Dämpfungsmedium, beispielsweise Öl, im Dämpferrohr 12' kann die Bewegung des Kolbens gebremst und somit eine Bewegung der verbundenen Bauteile gegeneinander gedämpft werden.

Um ein Anschlagen des Kolbens bzw. der Kolbenstange 14' bei Erreichen eines Endanschlags im Dämpferrohr 12' zu verhindern bzw. zu dämpfen, ist im Inneren des Dämpferrohrs 12' eine Zuganschlagfeder 20' vorgesehen (siehe Figur 2). Die Zuganschlagfeder 20' ist eine Spiralfeder, die in ihrem Innenraum die Kolbenstange 14' aufnimmt.

Die Zuganschlagfeder 20' ist mit einem ersten Ende 22' an einer Stirnseite 24' des Dämpferrohr 12' befestigt. Am entgegengesetzten zweiten Ende 26' ist die Zuganschlagfeder 20' mit einem Führungselement 28' auf der Kolbenstange 14' gelagert. An der Kolbenstange 14' ist ein Zuganschlagelement 30' vorgesehen.

Wird die Kolbenstange 14' in Längsrichtung L' aus dem Dämpferrohr 12' heraus bewegt, gelangt das Zuganschlagelement 30' mit dem Führungselement 28' und der Zuganschlagfeder 20' in Anlage. Eine weitere Bewegung der Kolbenstange 14' in Längsrichtung L' wird durch das Zusammendrücken der Zuganschlagfeder 20' gedämpft bzw. gebremst. Ein Anschlagen des Kolbens bzw. der Kolbenstange 14' an der Stirnseite 24' ist somit zuverlässig verhindert.

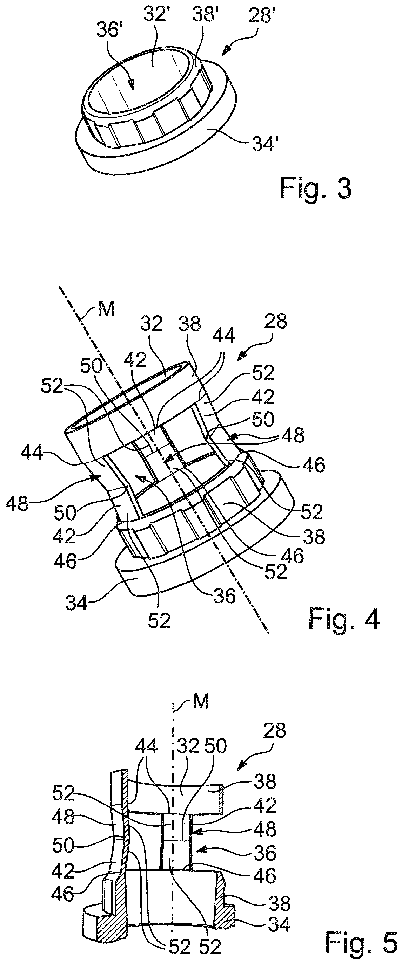

Die bisher verwendeten Führungselemente 28' weisen ein ringförmiges Führungsbauteil 38' sowie eine durch einen Flansch gebildete Aufnahme 34' für die Zuganschlagfeder 20' auf (siehe Figur 3). Das ringförmige Führungsbauteil 38' erstreckt sich in den Innenraum der Zuganschlagfeder 20', befindet sich also zwischen der Zuganschlagfeder 20' und der Kolbenstange 14', die Aufnahme 34' liegt am zweiten Ende 26' der Zuganschlagfeder 20' an.

Um die Bewegung der Kolbenstange 14' im Dämpferrohr 12', also auch gegen die Zuganschlagfeder 20' und das Führungselement 28' nicht zu behindern, ist der Innendurchmesser des Aufnahmeraums 36' geringfügig größer als der Außendurchmesser der Kolbenstange 14'. Das Führungselement 28' hat also bezogen auf den Dämpferrohr 12' in radialer Richtung ein Spiel auf der Kolbenstange 14'. Dies führt bei Beschleunigung senkrecht zur Längsachse L' dazu, dass das Führungselement 28' an der Kolbenstange 14' anschlagen kann, wodurch es zu einer unerwünschten Geräuschbildung kommen kann.

Um eine solche Geräuschbildung zu verhindern, ist das in den Figuren 4 und 5 gezeigte erfindungsgemäße Führungselement 28 vorgesehen. Das Führungselement 28 weist zwei ringförmige, in Längsrichtung L hintereinander angeordnete Führungsbauteile 38 auf, die gemeinsam die Führung 32 für die Kolbenstange 14 bilden. Zwischen den Führungsbauteilen 38 sind drei, in Umfangsrichtung U gleichmäßig verteilte Stege vorgesehen, die jeweils ein Federelement 42 bilden.

Die Federelemente 42 sind Blattfedern, die jeweils mit einem Ende 44, 46 mit einem der Führungsbauteile 38 verbunden sind. Wie insbesondere in Figur 5 zu sehen ist, sind die Federelemente 42 bogenförmig ausgebildet und ragen mit einem Federabschnitt 48 in den Aufnahmeraum 36. In einem Scheitelpunkt 50, der das Federelement 42 im Wesentlichen in zwei in Längsrichtung L gleich lange Abschnitte 52 unterteilt, hat das Federelement 42 den geringsten Abstand zur Mittelachse des Aufnahmeraums 36, ragt also am weitesten in den Aufnahmeraum 36 hinein. Die Federelemente 42 sind so ausgebildet, dass der Abstand der Scheitelpunkte 50 zur Mittelachse M des Aufnahmeraums 36 kleiner ist als der Radius der Kolbenstange 14.

Ist das Führungselement 28 auf der Kolbenstange 14 gelagert, liegen die Federelemente 42 federnd an der Kolbenstange 14 an und sind gegen diese vorgespannt. Durch diese Vorspannung wird das Führungselement 28 mittig auf der Kolbenstange 14 gehalten. Durch Querbeschleunigungen verursachte Stöße auf die Kolbenstange 14 bzw. auf das Führungselement 28 können durch eine Verformung der Federelemente 42 gedämpft werden. Ein Anschlagen des Führungselements 28 bzw. der Führungsbauteile 38 an der Kolbenstange 14 ist so verhindert. Ein solches Anschlagen wäre nur bei einer hohen Beschleunigung möglich, die zu einer so starken Verformung des Federelements 42 führt, dass die Führungsbauteile 38 an der Kolbenstange 14 anschlagen. Vorzugsweise sind die Federelemente 42 aber derart dimensioniert, dass dies bei den im Fahrzeugbetrieb üblichen Belastungen zuverlässig verhindert ist. Eine Geräuschbildung durch dieses Anschlagen ist somit zuverlässig verhindert oder zumindest deutlich reduziert.

Wie in den Figuren 4 und 5 zu sehen ist, verlaufen die Federelemente 42 im Wesentlichen bezüglich des Aufnahmeraums 36 in axialer Richtung, also in Richtung der Mittelachse M. Dies erleichtert die Montage des Führungselements 28 auf der Kolbenstange 14. Wird die Kolbenstange 14 auf das Führungselement 28 aufgeschoben, kann die Kolbenstange 14, sobald diese an den Federabschnitten 48 anliegt, diese radial nach außen verdrängen, wodurch die Federelemente 42 vorgespannt werden. Die Federabschnitte 48 wirken also zusätzlich als Einführschrägen. Ein zusätzlicher Montageschritt, um die Federelemente 42 vorzuspannen, ist somit nicht erforderlich. Zudem bilden die in Längsrichtung verlaufenden Federelemente 42 eine Gleitfläche, entlang der die Kolbenstange 14 verschoben werden kann.

Abweichungen vom gezeigten Ausführungsbeispiel sind selbstverständlich möglich. Insbesondere müssen die Federelemente 42 nicht in axialer Richtung bezüglich des Aufnahmeraums 36 verlaufen. Auch die Anzahl und Anordnung der Federelemente 42 kann beliebig angepasst werden. Insbesondere ist es ausreichend, ein Federelement vorzusehen, das in den Aufnahmeraum 36 ragt und federnd an der Kolbenstange 14 anliegen kann.

Die gezeigte Ausführungsform mit zwei Führungsbauteilen 38, zwischen welchen die Federelemente 42 angeordnet sind, bietet den Vorteil, dass die Bauhöhe in radialer Richtung bezüglich der Mittelachse M geringer ist, sodass zwischen Kolbenstange 14 und Zuganschlagfeder 20 ein geringerer Bauraum benötigt wird.

Die Führung 32 kann aber auch durch ein durchgehendes Führungsbauteil gebildet sein, auf dessen Innenseite zumindest ein Federelement 42 vorgesehen ist. Insbesondere können im Bereich der Federelemente 42 Aussparungen für die Federelemente 42 vorgesehen sein, um die Bauhöhe in radialer Richtung zu reduzieren.

## Patentansprüche

1. Führungselement (28) für eine Zuganschlagfeder (20) eines Fahrwerkdämpfers, die auf einer Kolbenstange (14) des Fahrwerkdämpfers verschiebbar gelagert ist, mit einer Führung (32), die einen zylindrischen Aufnahmeraum (36) für die Kolbenstange (14) aufweist, und einer Aufnahme (34) für ein Ende (26) der Zuganschlagfeder (20), wobei an der Führung (32) ein Federelement (42) vorgesehen ist, das in den Aufnahmeraum (36) ragt und federnd an der Kolbenstange (14) anliegen kann,
**dadurch gekennzeichnet, dass** das Federelement (42) durch eine Blattfeder gebildet ist, die mit einem Federabschnitt (48) in den Aufnahmeraum (36) ragt.

2. Führungselement nach Anspruch 1, **dadurch gekennzeichnet, dass** mehrere, in Umfangsrichtung (U) um den Aufnahmeraum (36) verteilt angeordnete Federelemente (42) vorgesehen sind.

3. Führungselement nach Anspruch 1 oder 2, **dadurch gekennzeichnet, dass** das bezüglich des Aufnahmeraums (36) in axialer Richtung angeordnet Federelement (42) bogenförmig in den Aufnahmeraum (36) ragt, wobei das Federelement (42) in einem Scheitelpunkt (50) den geringsten Abstand zur Mittelachse (M) des Aufnahmeraums (36) hat.

4. Führungselement nach einem der vorhergehenden Ansprüche, **dadurch gekennzeichnet, dass** die Führung (32) zwei ringförmige Führungsbauteile (38) aufweist und das Federelement (42) zwischen den Führungsbauteilen (38) angeordnet ist.

5. Führungselement nach Anspruch 4, **dadurch gekennzeichnet, dass** das zumindest eine Federelement (42) einstückig mit den Führungsbauteilen (38) ausgebildet ist und diese miteinander verbindet.

6. Führungselement nach einem der vorhergehenden Ansprüche, **dadurch gekennzeichnet, dass** die Aufnahme (34) für das Ende (26) der Zuganschlagfeder (20) durch einen radial nach außen ragenden Flansch gebildet ist.

7. Fahrwerkdämpfer (10) mit einem Dämpferrohr (12), in dem eine Kolbenstange (14) sowie eine in Längsrichtung der Kolbenstange (14) angeordnete Zuganschlagfeder (20) vorgesehen sind, und mit einem Führungselement (28) nach einem der vorhergehenden Ansprüche, wobei das Ende der Zuganschlagfeder (20) an der Aufnahme (34) anliegt und/oder an dieser geklemmt ist und das Führungselement (28) mit der Führung (32) in Längsrichtung (L) so verschiebbar auf der Kolbenstange (14) gelagert ist, dass zumindest ein durch eine Blattfeder gebildetes und mit einem Federabschnitt (48) in den Aufnahmeraum (36) ragendes Federelement (42) gegen die Kolbenstange (14) vorgespannt ist.

## Claims

1. A guide element (28) for a buffer spring (20) in a chassis shock absorber, which buffer spring is slidably mounted on a piston rod (14) of the chassis shock absorber, with a guide (32) that has a cylindrical receiving space (36) for the piston rod (14), and a receptacle (34) for an end (26) of the buffer spring (20), wherein a spring element (42) is provided on the guide (32), which spring element protrudes into the receiving space (36) and can bear resiliently against the piston rod (14),
**characterised in that** the spring element (42) is formed by a leaf spring which protrudes into the receiving space (36) by means of a spring portion (48).

2. A guide element according to claim 1, **characterised in that** a plurality of spring elements (42) distributed around the receiving space (36) in the circumferential direction (U) are provided.

3. A guide element according to claim 1 or 2, **characterised in that** the spring element (42) arranged in the axial direction with respect to the receiving space (36) protrudes in an arcuate manner into the receiving space (36), wherein the spring element (42) has the shortest distance from the middle axis (M) of the receiving space (36) at a vertex (50).

4. A guide element according to any one of the preceding claims, **characterised in that** the guide (32) has two annular guide components (38) and the spring element (42) is arranged between the guide components (38).

5. A guide element according to claim 4, **characterised in that** the at least one spring element (42) is formed in one piece with the guide components (38) and connects these to one another.

6. A guide element according to any one of the preceding claims, **characterised in that** the receptacle (34) for the end (26) of the buffer spring (20) is formed by a radially outwardly protruding flange.

7. A chassis shock absorber (10) with a damper tube (12), in which a piston rod (14) and a buffer spring (20) arranged in the longitudinal direction of the piston rod (14) are provided, and with a guide element (28) according to any one of the preceding claims, wherein the end of the buffer spring (20) bears against the receptacle (34) and/or is clamped thereto and the guide element (28) together with the guide (32) is mounted on the piston rod (14) so as to be displaceable in the longitudinal direction (L), such that at least one spring element (42) formed by a leaf spring and protruding into the receiving space (36) by means of a spring portion (48) is pretensioned against the piston rod (14).

## Revendications

1. Elément de guidage (28) destiné à un ressort amortisseur de traction (20) d'un amortisseur de châssis qui est monté mobile en translation sur une tige de piston (14) de l'amortisseur de châssis, comprenant un guidage (32) qui comporte une chambre de réception cylindrique (36) de la tige de piston (14) et un logement de réception (34) d'une extrémité (26) du ressort amortisseur de traction (20), sur le guidage (32) étant prévu un élément élastique (42) qui pénètre dans la chambre de réception (36) et peut s'appliquer élastiquement sur la tige de piston (14),
**caractérisé en ce que**
l'élément élastique (42) est formé par un ressort à lame qui pénètre dans la chambre de réception (36) par un segment élastique (48).

2. Elément de guidage conforme à la revendication 1,
**caractérisé en ce qu'**
il est prévu plusieurs éléments élastiques (42) répartis autour de la chambre de réception (36) dans la direction périphérique (U).

3. Elément de guidage conforme à la revendication 1 ou 2,
**caractérisé en ce que**
l'élément élastique (42) monté en direction axiale relativement à la chambre de réception (36) pénètre en forme d'arc dans la chambre de réception (36), l'élément élastique (42) étant au niveau d'un sommet (50) à la plus faible distance de l'axe médian (M) de la chambre de réception (36).

4. Elément de guidage conforme à l'une des revendications précédentes,
**caractérisé en ce que**
le guidage (32) comporte deux éléments de guidage annulaires (38) et l'élément élastique (42) est monté entre ces éléments de guidage (38),

5. Elément de guidage conforme à la revendication 4,
**caractérisé en ce que**
l'élément élastique (42) est réalisé en une seule pièce avec les éléments de guidage (38) et les relie.

6. Elément de guidage conforme à l'une des revendications précédentes,
**caractérisé en ce que**
le logement de réception (34) de l'extrémité (26) du ressort amortisseur de traction (20) est formé par une bride faisant saillie radialement vers l'extérieur.

7. Amortisseur de châssis (10) comportant un tube amortisseur (12) dans lequel sont montés une tige de piston (14) ainsi qu'un ressort amortisseur de traction (20) s'étendant dans la direction longitudinale de la tige de piston (14), ainsi qu'un élément de guidage (28) conforme à l'une des revendications précédentes, l'extrémité du ressort amortisseur de traction (20) s'appliquant sur le logement de réception (34) et/ou étant serré sur celui-ci, et l'élément de guidage (28) étant monté mobile en translation dans la direction longitudinale (L) avec le guidage (32) sur la tige de piston (14) de sorte qu'au moins un élément élastique (42) formé par un ressort à lame et pénétrant la chambre de réception (36) par un segment élastique (48) soit précontraint contre la tige de piston (14).
